# FASCICULE DE BREVET EUROPEEN

(11) **EP 0 986 849 B1**
(45) Date de publication et mention de la délivrance du brevet: **05.09.2007**
(21) Numéro de dépôt: 99911856.5
(22) Date de dépôt: 01.04.1999
(51) Int. Cl.: H02G 3/04

(54) **GOULOTTE DE CABLAGE ET ACCESSOIRE SUSCEPTIBLE D' ETRE RAPPORTE SUR UNE TELLE GOULOTTE DE CABLAGE**
KABELKANAL UND ZUBEHÖR DAFÜR
WIRING DUCT AND ACCESSORY CAPABLE OF BEING DIRECTLY MOUNTED ON SAID WIRING DUCT

(30) Priorité: 03.04.1998 FR 9804154
(43) Date de publication de la demande: 22.03.2000
(73) Titulaire: PLANET WATTOHM, 60300 Senlis (FR)
(72) Inventeur: CLAISSE, Jean-Jacques, F-60800 Crépy en Valois (FR); GUILLERAULT, Eric, F-75011 Paris (FR)
(74) Mandataire: Santarelli
(86) Numéro de dépôt international: PCT/FR1999/000762
(87) Numéro de publication internationale: WO 1999/052189

(56) Documents cités:
- DE-U- 1 903 071
- US-A- 3 890 459

## Description

La présente invention concerne d'une manière générale les goulottes de câblage du type de celles mises en oeuvre, par exemple, dans les armoires électriques, pour le cheminement et la protection de câbles électriques.

Ces goulottes de câblage comportent, globalement, suivant une section transversale en forme générale de U, un fond et deux ailes latérales, avec, de place en place, sur l'une au moins des ailes latérales, et, en pratique, sur chacune de celles-ci, des ouvertures propres à permettre, localement, à la demande, en un ou plusieurs endroits dûment choisis le long de leur longueur, l'entrée ou la sortie d'un ou plusieurs câbles électriques.

En pratique, ces ouvertures s'étendent sensiblement perpendiculairement au fond, et, le plus souvent, pour faciliter le passage des câbles électriques, elles débouchent sur le bord libre des ailes latérales, en délimitant ainsi deux à deux sur celles-ci des languettes parallèles.

Ainsi que cela est décrit dans le document US-A-3 890 459 une goulotte munie de telles ouvertures peut coopérer avec un couvercle d'une part, et avec des doigts, chacun de ces doigts étant muni d'une patte d'encliquetage engagée près de la sortie de ces ouvertures.

Pour que les ailes latérales ainsi fractionnées en languettes conservent une tenue mécanique satisfaisante, il est usuel, à ce jour, de ne faire débuter leurs ouvertures qu'à distance du fond.

Or, réalisées à des longueurs déterminées, les goulottes de câblage de ce type doivent fréquemment être tronçonnées à une longueur inférieure, notamment pour satisfaire à leurs conditions pratiques d'utilisation.

Pour bénéficier de la séparation déjà due aux ouvertures des ailes latérales, le tronçonnage correspondant est en pratique assuré au droit de ces ouvertures.

Mais la matière subsistant entre les extrémités borgnes des ouvertures et le fond rend parfois malaisé, et incertain, ce tronçonnage.

Il en est de même lorsque l'une quelconque des ailes latérales doit localement être éliminée dans sa totalité pour permettre d'abouter latéralement à une telle goulotte de câblage une autre goulotte de câblage, suivant par exemple une dérivation en T.

A ce propos, le document DE-U-1 903 071 décrit une goulotte de câblage du genre comportant, suivant une section transversale en forme générale de U, un fond et deux ailes, avec sur les ailes des ouvertures propres à permettre, localement, l'entrée ou la sortie d'un câble électrique, et délimitant ainsi des languettes sur les ailes. Pour permettre l'élimination de languettes et aussi élargir les ouvertures, il est prévu que les languettes séparant les ouvertures soient reliées au fond par une zone affaiblie définie par des rainures longitudinales. Mais il en découle une réduction sensible de la tenue mécanique des ailes. Certaines des ouvertures ont une largeur qui en certains endroits se réduit à une fente, mais cela n'a aucun effet de renforcement mécanique.

La présente invention a d'une manière générale pour objet une disposition qui permet de faciliter ces opérations, en conduisant en outre à d'autres avantages.

De manière plus précise, elle a tout d'abord pour objet une goulotte de câblage du genre comportant, suivant une section transversale en forme générale de U, un fond et deux ailes latérales, avec, de place en place, sur l'une au moins des ailes latérales, des ouvertures propres à permettre, localement, l'entrée ou la sortie d'au moins un câble électrique, cette goulotte de câblage étant d'une manière générale caractérisée en ce qu'elle présente, à l'aplomb de l'une au moins des ouvertures de l'une au moins de ses ailes latérales, entre l'extrémité borgne de cette ouverture et le fond, au moins un orifice ayant un contour fermé.

Par sa présence même, cet orifice facilite avantageusement la découpe éventuelle à cet endroit de l'aile latérale concernée, en réduisant l'étendue de la matière à traverser sous l'ouverture correspondante.

Le tronçonnage de la goulotte de câblage à toute longueur désirée se trouve ainsi avantageusement facilité, et il en est de même pour l'élimination locale d'une des ailes latérales, par découpe d'un panneau dans celle-ci.

Conjointement, la tenue mécanique des ailes latérales se trouve ménagée.

Ainsi, un compromis intéressant est trouvé entre, d'une part, une extension relativement réduite des ouvertures des ailes latérales, permettant de garder une tenue mécanique satisfaisante pour ces ailes latérales, et, d'autre part, une facilité de coupe également satisfaisante pour ces ailes latérales.

Suivant une forme préférée de réalisation, chacun des orifices prévus suivant l'invention comporte deux bords latéraux, qui, du côté du fond de la goulotte de câblage, convergent au moins localement l'un vers l'autre, suivant une forme générale de pointe dirigée vers ce fond.

Grâce à une telle configuration, ces orifices sont avantageusement de nature à permettre un guidage au mieux de l'outil de coupe mis en oeuvre pour le tronçonnage de la goulotte de câblage ou l'élimination locale d'une de ses ailes latérales, au bénéfice de la qualité de la coupe correspondante.

Outre cette facilité de coupe, les orifices prévus suivant l'invention présentent d'autres avantages.

Tout d'abord, ils permettent si désiré le passage d'un quelconque lien.

Il s'agit par exemple d'un lien qui, établi de l'une à l'autre des ailes latérales, en enrobant le fond, permet de maintenir plaquée contre ce fond tout ou partie des câbles électriques concernés, ce qui est particulièrement intéressant lorsque, comme cela est le cas le plus fréquent, la goulotte de câblage s'étend à la verticale.

Mais il peut s'agir également d'un lien permettant d'assurer la fixation d'un quelconque organe à la goulotte de câblage, et, notamment, celle d'une gaine de liaison établie entre elle et une autre goulotte de câblage, comme cela peut notamment être le cas lorsque l'une de ces goulottes de câblage est implantée à l'intérieur même d'une armoire électrique tandis que l'autre est implantée au dos de la porte de cette armoire électrique.

L'un ou l'autre des orifices prévus suivant l'invention peut enfin avantageusement être mis à profit pour permettre de rapporter, localement, sur la goulotte de câblage, un quelconque accessoire prévu spécifiquement à cet effet.

La présente invention a, à cet égard, encore pour objet, un accessoire pour goulotte de câblage caractérisé, précisément, en ce qu'il comporte, localement, en saillie, au moins une patte d'encliquetage par laquelle il est apte à se crocheter sur l'une des ailes latérales d'une telle goulotte de câblage à la faveur d'un quelconque des orifices que cette aile latérale présente suivant l'invention.

Il peut s'agir, par exemple, d'un accessoire comportant, suivant l'invention, à la manière d'une potence, d'une part, un jambage, par lequel il est destiné à être adossé à l'aile latérale sur laquelle il doit être rapporté, et qui porte en conséquence en saillie sa ou ses pattes d'encliquetage, et, d'autre part, une traverse, qui s'étend en porte à faux à compter de ce jambage, et par laquelle il est destiné à surplomber au moins localement le fond de la goulotte de câblage, à distance de ce fond, et sur une partie au moins de la largeur de celui-ci.

Grâce à cette traverse, qui ne s'oppose pas de manière sensible à la mise en place des câbles électriques, cet accessoire est avantageusement de nature à permettre une certaine retenue de ces câbles électriques soit, lorsqu'un couvercle est normalement prévu à cet effet, en l'absence temporaire de ce couvercle, par exemple avant la mise en place de celui-ci ou lors d'un de ses retraits, soit, lorsqu'un tel couvercle n'est pas prévu, en suppléant alors de manière permanente à son absence.

Suivant un développement de l'invention, l'accessoire ainsi mis en oeuvre peut d'ailleurs lui-même permettre la mise en place d'un couvercle.

Par exemple, suivant une forme préférée de réalisation, cet accessoire comporte, à cet effet, à son dos, c'est-à-dire du côté opposé à sa traverse, une rainure propre à l'encliquetage d'un tel couvercle.

La présente invention a encore pour objet toute goulotte de câblage équipée d'au moins un tel accessoire à la faveur d'un orifice présent à l'aplomb de l'une au moins des ouvertures de l'une au moins de ses ailes latérales.

Les objets de l'invention, ainsi que leurs caractéristiques et leurs avantages, ressortiront d'ailleurs de la description qui va suivre, à titre d'exemple, en référence aux dessins schématiques annexés sur lesquels :
la figure 1 est une vue partielle en perspective d'une goulotte suivant l'invention ;
la figure 2 en est, à échelle supérieure, et avec un arrachement local, une vue partielle en élévation, suivant la flèche Il de la figure 1 ;
la figure 3 est une vue en perspective illustrant la réalisation d'une dérivation à partir d'une telle goulotte de câblage ;
la figure 4 est une vue partielle en perspective d'une autre goulotte de câblage suivant l'invention, qui est équipée d'accessoires suivant l'invention, et à laquelle est associé un couvercle ;
la figure 5 est une vue en coupe transversale de cette goulotte de câblage et des accessoires qui l'équipent, suivant la ligne V-V de la figure 4 ;
la figure 6 reprend, à échelle supérieure, le détail de la figure 5 repéré par un encart VI sur cette figure 5 ;
la figure 7 est une vue en perspective d'un accessoire suivant l'invention, représenté isolément ;
la figure 8 est, à échelle différente, une vue en élévation de cet accessoire, suivant la flèche VIII de la figure 7 ;
la figure 9 est une vue en coupe transversale analogue à celle de la figure 5, pour une variante de réalisation ;
la figure 10 reprend, à échelle supérieure, le détail de la figure 9 repéré par un encart X sur cette figure 9 ;
la figure 11 est une vue en coupe transversale elle aussi analogue à celle de la figure 5, pour une autre variante de réalisation ;
la figure 12 reprend, à échelle supérieure, le détail de la figure 11 repéré par un encart XII sur cette figure 11 ;
la figure 13 est une vue partielle en coupe transversale analogue à celle de la figure 13, pour une autre variante de réalisation;
la figure 14 est une vue partielle en perspective analogue à celle de la figure 1, pour une autre variante de réalisation de la goulotte de câblage suivant l'invention ;
la figure 15 reprend, à échelle supérieure, le détail de la figure 14 repéré par un encart XV sur cette figure 14 ;
la figure 16 est, à échelle différente, une vue partielle en perspective analogue à celle de la figure 1, pour une autre variante de réalisation de la goulotte de câblage suivant l'invention;
la figure 17 est, à échelle supérieure, et à la manière de la figure 2, une vue partielle en élévation de cette variante de réalisation, suivant la flèche XVII de la figure 16 ;
la figure 18 est une vue en perspective analogue à celle de la figure 7, pour une variante de réalisation de l'accessoire suivant l'invention;
la figure 19 est une vue partielle en élévation analogue à celle de la figure 17, pour une autre variante de réalisation de la goulotte de câblage suivant l'invention.

Tel qu'illustré sur ces figures, et de manière connue en soi, la goulotte de câblage 10 suivant l'invention comporte, globalement, suivant une section transversale en forme générale de U, un fond 11 et deux ailes latérales 12.

Dans les formes de réalisation représentées, le fond 11 est plat, et les ailes latérales 12 s'étendent sensiblement perpendiculairement à lui.

De manière connue en soi, l'une au moins des ailes latérales 12 présente, de place en place, des ouvertures 13 propres à permettre, localement, si désiré, l'entrée ou la sortie d'au moins un câble électrique, non représenté.

Préférentiellement, et cela est le cas dans les formes de réalisation représentées, chacune des ailes latérales 12 comporte, ainsi, de place en place, des ouvertures 13.

En pratique, les ailes latérales 12 sont identiques l'une à l'autre, et, en particulier, elles ont l'une et l'autre une même hauteur.

Préférentiellement, et cela est le cas dans les formes de réalisation représentées, leurs ouvertures 13 sont établies à un pas P régulier, et, d'une des ailes latérales 12 à l'autre, ces ouvertures 13 sont en correspondance les unes avec les autres.

En pratique, ces ouvertures 13 sont toutes identiques entre elles.

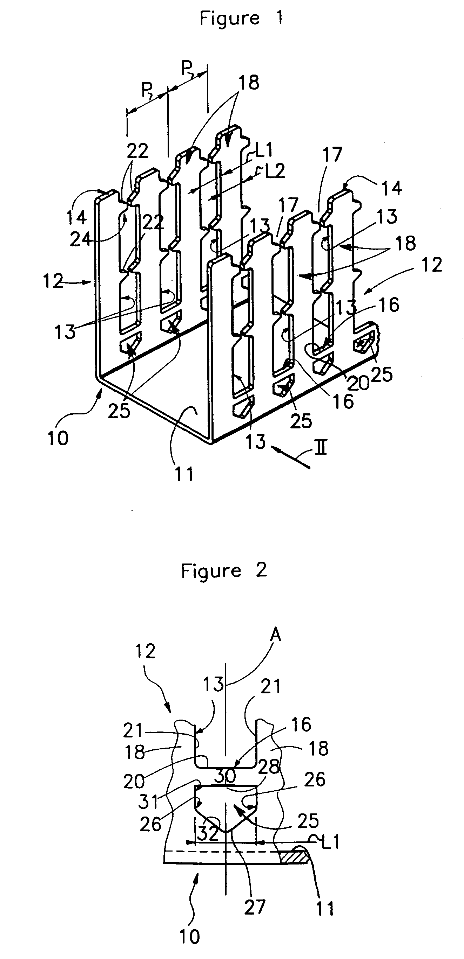

Dans les formes de réalisation plus particulièrement représentées sur les figures 1 à 8 et 14 à 17, elles débouchent, toutes, librement, à la manière de fentes ou d'encoches, sur le bord libre 14 des ailes latérales 12.

Dans ces formes de réalisation, elles s'étendent donc, chacune, d'une extrémité borgne 16 à une extrémité ouverte 17, et elles délimitent, conjointement, deux à deux, dans les ailes latérales 12, des languettes 18 parallèles.

Dans les formes de réalisation représentées, la largeur L2 de ces languettes 18 est du même ordre de grandeur que la largeur L1 des ouvertures 13, tout en étant légèrement supérieure à cette largeur L1, mais cela n'est pas indispensable.

En pratique, l'extrémité borgne 16 des ouvertures 13 s'étend à distance du fond 11.

Dans les formes de réalisation représentées, les ouvertures 13 présentent, à cette extrémité borgne 16, un fond 20, qui est droit, et qui s'étend sensiblement parallèlement au fond 11.

Pour l'essentiel, les bords latéraux 21 des ouvertures 13 sont, eux-mêmes, globalement droits, et, parallèles l'un à l'autre, ils s'étendent sensiblement perpendiculairement au fond 11.

Cependant, dans les formes de réalisation plus particulièrement représentées sur les figures 1 à 13 et 16 et 17, des ergots 22 font localement saillie sur chacun de ces bords latéraux 21, à au moins un niveau de ceux-ci, pour restreindre, localement, la largeur des ouvertures 13.

Par exemple, et tel que représenté, de tels ergots 22 sont prévus, d'une part, à mi-hauteur, et, d'autre part, à proximité de l'extrémité ouverte 17 des ouvertures 13.

Préférentiellement, et cela est le cas dans les formes de réalisation représentées, ceux, au moins, de ces ergots 22 qui sont à proximité de l'extrémité ouverte 17 des ouvertures 13, forment, conjointement, entre les bords latéraux 21 d'une telle ouverture 13, un épaulement 24 qui s'étend sensiblement parallèlement au fond 11.

Suivant l'invention, la goulotte de câblage 10 présente, à l'aplomb de l'une au moins des ouvertures 13 de l'une au moins de ses ailes latérales 12, entre cette ouverture 13 et le fond 11, au moins un orifice 25.

Dans les formes de réalisation représentées, chacune des ailes latérales 12 comportant, de place en place, des ouvertures 13, il y a au moins un orifice 25 à l'aplomb de chacune de celles-ci.

En pratique, cet orifice 25 a un contour fermé.

Il comporte, globalement, dans les formes de réalisation représentées, deux bords latéraux 26, qui, du côté du fond 11, convergent au moins localement l'un vers l'autre, suivant une forme générale de pointe 27 dirigée vers ce fond 11.

En outre, dans les formes de réalisation représentées, l'un au moins des bords latéraux 26 des orifices 25 s'étend sensiblement perpendiculairement au fond 11 sur une partie au moins de sa longueur.

Enfin, dans les formes de réalisation représentées, les orifices 25 comportent, du côté de l'ouverture 13 à laquelle ils sont associés, un bord 28 qui est parallèle au fond 11, et qui, donc, est parallèle au propre fond 20 de cette ouverture 13, en délimitant avec ce fond 20 une bride 30.

Dans les formes de réalisation plus particulièrement représentées sur les figures 1 à 15, il n'est prévu qu'un seul orifice 25 sous chacune des ouvertures 13 des ailes latérales 12, et sa largeur est sensiblement égale à la largeur L1 de ces ouvertures 13.

Préférentiellement, et cela est le cas dans les formes de réalisation représentées, cet orifice 25 est symétrique par rapport à un axe A sensiblement perpendiculaire au fond 11.

Cet axe A est schématisé en traits interrompus sur la figure 2.

Pour chacun des orifices 25, il passe par la pointe 27 que forme un tel orifice 25.

Du fait de la symétrie correspondante, chacun des bords latéraux 26 des orifices 25 s'étend, dans ce cas, sensiblement perpendiculairement au fond 11 sur une partie au moins de sa longueur.

Mais, du fait de la pointe 27, ces bords latéraux 26 ne s'étendent ainsi perpendiculairement au fond 11 que sur une partie de leur longueur à compter du bord 28.

Autrement dit, dans les formes de réalisation représentées sur les figures 1 à 15, les bords latéraux 26 des orifices 25 comportent, successivement, à compter de ce bord 28, un tronçon 31, qui s'étend sensiblement perpendiculairement au fond 11, et un tronçon 32, qui s'étend, lui, au contraire, en oblique par rapport à ce fond 11, en convergeant avec le tronçon 32 correspondant de l'autre bord latéral 26 pour former la pointe 27 sur l'axe A.

Les orifices 25 prévus suivant l'invention venant en déduction de la matière présente entre les ouvertures 13 des ailes latérales 12 et le fond 11, le tronçonnage de la goulotte de câblage 10 au droit de ces ouvertures 13 se trouve facilité.

En effet, ce tronçonnage n'implique plus que la traversée de la bride 30 correspondante et la coupe de la matière subsistant entre la pointe 27 des orifices 25 et le fond 11.

En outre, du fait même de cette pointe 27, l'outil de coupe mis en oeuvre pour ce tronçonnage se trouve avantageusement guidé vers l'axe A correspondant, par coulissement le long du tronçon 32 oblique de l'un ou l'autre des bords latéraux 26 de l'orifice 25 concerné.

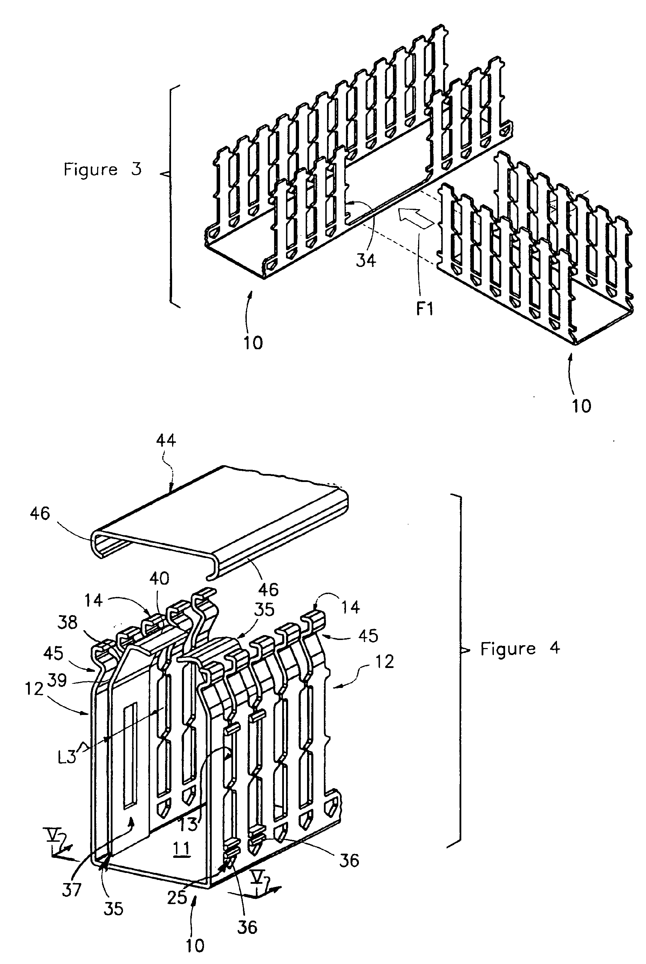

Si désiré, et tel que représenté à la figure 3, la découpe pratiquée peut n'intéresser qu'une des ailes latérales 12, pour une élimination locale quasi totale de celle-ci.

Il peut ainsi être pratiqué, dans cette aile latérale 12, une ouverture 34 permettant d'abouter, latéralement, à la goulotte de câblage 10, suivant la flèche F1 de la figure 3, une autre goulotte de câblage 10, par exemple pour l'établissement d'une dérivation en T.

La goulotte de câblage 10 ainsi aboutée latéralement à celle découpée peut s'étendre d'équerre par rapport à celle-ci.

Mais elle peut également s'étendre en oblique par rapport à cette goulotte de câblage 10, si son propre tronçonnage est pratiqué en conséquence.

Tel qu'évoqué ci-dessus, les orifices 25 prévus suivant l'invention peuvent également être mis à profit pour l'établissement d'un quelconque lien, non représenté.

Tel que représenté sur les figures 4 à 13, ils peuvent également être mis à profit pour permettre de rapporter, sur la goulotte de câblage 10, un quelconque accessoire 35, spécifiquement prévu à cet effet.

Il suffit, pour l'essentiel, pour ce faire, que cet accessoire 35 comporte, localement, en saillie, au moins une patte d'encliquetage 36 par laquelle il est apte à se crocheter sur l'une des ailes latérales 12 de la goulotte de câblage 10 à la faveur d'un quelconque des orifices 25 que cette aile latérale 12 présente à l'aplomb de ses ouvertes 13.

Dans les formes de réalisation représentées, l'accessoire 35 ainsi prévu suivant l'invention comporte, globalement, d'une part, un jambage 37, par lequel il est destiné à être adossé à l'une des ailes latérales 12 de la goulotte de câblage 10, et qui porte en saillie sa ou ses pattes d'encliquetage 36, et, d'autre part, une traverse 38, qui s'étend en porte à faux à compter de ce jambage 37, et par laquelle il est destiné à surplomber au moins localement le fond 11 de la goulotte de câblage 10, à distance de ce fond 11, et sur une partie au moins de la largeur de celui-ci.

Par exemple, et tel que représenté, le jambage 37 est plat, à la manière d'un feuillard, et la traverse 38 s'étend en continuité avec ce jambage 37, suivant la même largeur L3 que celui-ci.

Par exemple, et tel que représenté, cette largeur L3 est suffisante pour que, une fois appliqué, de manière symétrique, à une languette 18, le jambage 37 de l'accessoire 35 s'étende, latéralement, en largeur jusqu'à au moins chacune des deux languettes 18 les plus proches, en recouvrant, donc, dans l'intervalle, deux ouvertures 13.

Mais, bien entendu, il n'en est pas toujours nécessairement ainsi.

Au contraire, ce jambage 37 peut par exemple tout aussi bien ne recouvrir qu'une des ouvertures 13 adjacentes, voire, même, ainsi qu'il apparaîtra ultérieurement, ne s'étendre que sur la languette 18 à laquelle il est appliqué.

Suivant une variante de réalisation non représentée, il peut également s'étendre, par exemple, sur deux languettes 18 et une ouverture 13.

Par rapport au jambage 37, la traverse 38 s'étend en auvent.

Dans la forme de réalisation plus particulièrement représentée sur les figures 4 à 8, cette traverse 38 forme globalement un dièdre, en présentant, successivement, à compter du jambage 37, un premier tronçon 39, qui s'étend en oblique par rapport à ce jambage 37, et un deuxième tronçon 40, qui, en oblique par rapport au précédent, forme un retour en direction de l'intérieur de la goulotte de câblage 10, sensiblement parallèlement au fond 11 de celle-ci.

Dans la forme de réalisation plus particulièrement représentée sur les figures 4 à 8, l'accessoire 35 intervient sur la face interne de l'aile latérale 12 à laquelle il est appliqué, et il comporte, à proximité l'une de l'autre, deux pattes d'encliquetage 36, qui sont orientées en sens opposés l'une par rapport à l'autre, et par lesquelles il est apte à enserrer l'une des brides 30 que l'aile latérale 12 concernée de la goulotte de câblage 10 forme localement entre ses ouvertures 13 et ses orifices 25.

Ainsi qu'il est aisé de le comprendre, le fait que le bord 28 d'un tel orifice 25 qui délimite une telle bride 30 soit droit, parallèlement au fond 11, facilite l'emprise de la patte d'encliquetage 36 correspondante sur cette bride 30.

Il en est de même pour le fond 20 de l'ouverture 13 concernée.

En pratique, les pattes d'encliquetage 36 de l'accessoire 35, sont élastiquement déformables, et elles sont l'une et l'autre conformées en crochet.

Préférentiellement, et cela est le cas dans les formes de réalisation représentées, l'accessoire 35 comporte, à distance de sa ou de ses pattes d'encliquetage 36, des moyens d'encliquetage complémentaires par lesquels il est également apte à se crocheter sur l'aile latérale 12 concernée de la goulotte de câblage 10.

Dans la forme de réalisation plus particulièrement représentée sur les figures 4 à 8, ces moyens d'encliquetage complémentaires sont constitués par au moins une autre patte d'encliquetage 36, qui est parallèle aux précédentes, et par laquelle l'accessoire 35 est apte à se crocheter sur l'épaulement 24 que forment les ergots 22 présents à proximité de l'extrémité ouverte 17 de l'ouverture 13 concernée.

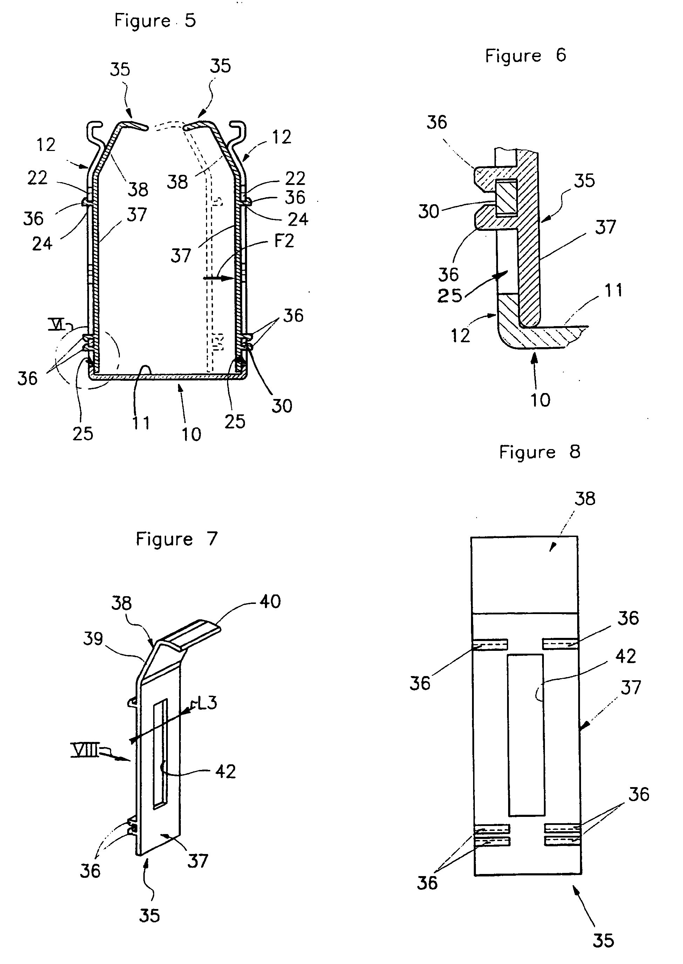

En pratique, l'accessoire 35 s'étendant, en largeur, dans la forme de réalisation représentée, sur une languette 18 et deux ouvertures 13, il comporte, ainsi qu'il est mieux visible sur la figure 8, d'une part, à un même niveau, à l'une des extrémités de son jambage 37, deux paires de pattes d'encliquetage 36, qui sont écartées l'une de l'autre d'une distance au moins égale à la largeur L2 des languettes 18, et, d'autre part, et également à un même niveau, supérieur au précédent, à l'autre des extrémités de son jambage 37, deux pattes d'encliquetage 36, qui sont écartées l'une de l'autre d'une même distance que les paires de pattes d'encliquetage 36 précédentes.

Toutes ces pattes d'encliquetage 36 interviennent au dos de l'accessoire 35, et, plus précisément, au dos de son jambage 37, c'est-à-dire du côté opposé à sa traverse 38.

Dans la forme de réalisation représentée, le jambage 37 de l'accessoire 35 est ajouré, dans sa zone médiane, d'un évidement 42, qui s'étend parallèlement à ses bords latéraux, sur la majeure partie de sa hauteur, entre les pattes d'encliquetage 36 du niveau inférieur et les pattes d'encliquetage 36 du niveau supérieur, et dont la largeur est sensiblement égale à la largeur L2 des languettes 18.

Par exemple, la traverse 38 de l'accessoire 35 s'étend au plus sur la moitié de la largeur du fond 11 de la goulotte de câblage 10, et, tel que représenté sur les figures, il est prévu, en regard l'un de l'autre, sur cette goulotte de câblage 10, deux accessoires 35, l'un rapporté sur l'une des ailes latérales 12 de cette goulotte de câblage 10, l'autre rapporté sur l'autre de ces ailes latérales 12, tel que schématisé par une flèche F2 pour l'un d'eux sur la figure 5.

Mais, suivant une variante de réalisation non représentée, la traverse 38 s'étend sur plus de la moitié de la largeur du fond 11, et les accessoires 35 sont établis de manière alternée d'une des ailes latérales 12 à l'autre, pour que leurs traverses 38 soient imbriquées l'une par rapport à l'autre.

Quoi qu'il en soit, et ainsi qu'il est aisé de le comprendre, les accessoires 35 ainsi mis en oeuvre ne s'opposent pas à la mise en place de câbles électriques dans la goulotte de câblage 10, mais, par leur traverse 38, ils assurent ensuite, si nécessaire, une certaine retenue de ces câbles électriques.

Dans la forme de réalisation représentée sur les figures 4 à 8, il est associé, à la goulotte de câblage 10, un couvercle 44.

Pour ce faire, les ailes latérales 12 de cette goulotte de câblage 10, et, plus précisément, les languettes 18 qui les constituent, sont, le long de leur bord libre 14, conformées de manière à constituer, extérieurement, dos à dos, deux gorges 45 propres à l'encliquetage d'un tel couvercle 44.

Conjointement, ce couvercle 44 présente, le long de ses bords longitudinaux, deux bords tombés 46, qui sont, par exemple, recourbés chacun vers l'intérieur, tel que représenté.

En variante, il peut être tiré profit de l'accessoire 35 suivant l'invention pour l'implantation d'un tel couvercle 44.

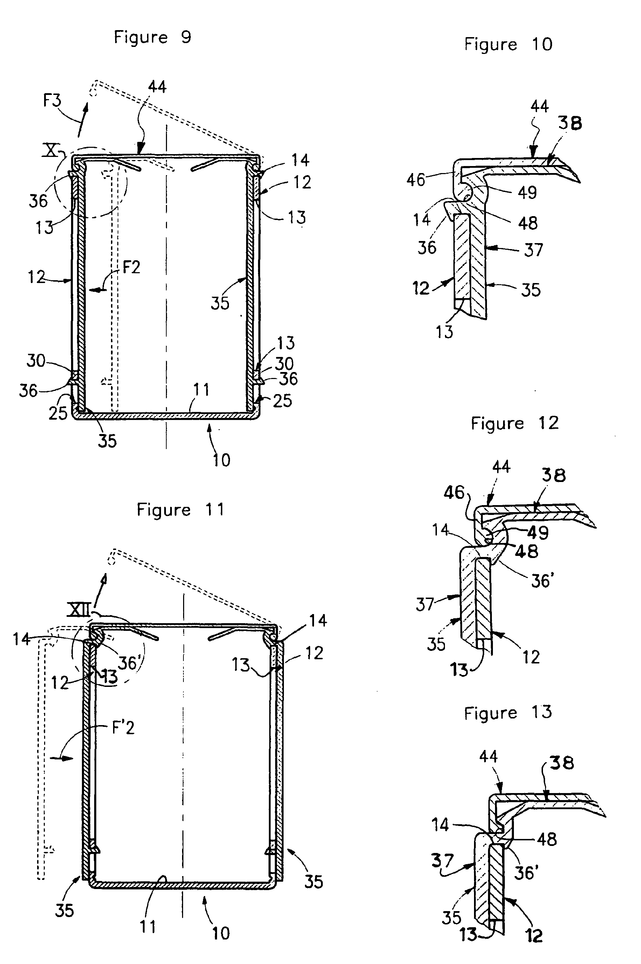

Cela est le cas pour les formes de réalisation représentées sur les figures 9 à 17, pour lesquelles, comme pour la forme de réalisation représentée sur les figures 1 à 3, les ailes latérales 12 de la goulotte de câblage 10 ne forment pas de gouttière 45 au voisinage de leur bord libre 14.

Dans la forme de réalisation plus particulièrement représentée sur les figures 9 et 10, l'accessoire 35 intervient, comme précédemment, sur la face interne des ailes latérales 12 de la goulotte de câblage 10, tel que schématisé par une flèche F2 pour l'un d'eux sur la figure 9.

Mais, à niveau avec les orifices 25 de ces ailes latérales 12, il ne comporte qu'une patte d'encliquetage 36, qui, à la faveur d'un tel orifice 25, est apte à se crocheter sur la bride 30 correspondante, du côté de celle-ci tourné vers le fond 11.

Comme précédemment, également, l'accessoire 35 comporte, à distance de cette patte d'encliquetage 36, des moyens d'encliquetage complémentaires, et ceux-ci sont constitués par une patte d'encliquetage 36 qui, orientée en sens opposé par rapport à la patte d'encliquetage 36 précédente, est apte à venir se crocheter sur le bord libre 14 de l'aile latérale 12 concernée.

En effet, dans la forme de réalisation représentée, les ouvertures 13 des ailes latérales 12 de la goulotte de câblage 10 ont, à titre d'exemple, un contour fermé.

Mais, comme précédemment, ce contour pourrait tout aussi bien être ouvert, la patte d'encliquetage 36 supérieure venant alors se prendre sur un épaulement du type de l'épaulement 24 correspondant.

Conjointement, dans la forme de réalisation représentée, l'accessoire 35 comporte, à son dos, c'est-à-dire du côté opposé à sa traverse 38, une rainure 48 propre à l'encliquetage du couvercle 44, et, corollairement, pour cet encliquetage, ce couvercle 44 présente, de manière complémentaire, au bout de chacun de ses bords tombés 46, un bourrelet 49.

Par exemple, et tel que représenté, la rainure 48 que l'accessoire 35 comporte à son dos intervient sensiblement au niveau du raccordement de sa traverse 38 avec son jambage 37.

Dans la forme de réalisation représentée, cette rainure 48 est arrondie, suivant une section transversale circulaire, pour un montage pivotant du couvercle 44, et il en est donc de même pour les bourrelets 49 de ce couvercle 44.

Ainsi, et tel que schématisé en traits interrompus sur la figure 9, le couvercle 44 peut être ouvert d'un côté ou de l'autre, par pivotement le long de son bord longitudinal opposé, suivant par exemple la flèche F3 de cette figure 9.

Suivant la forme de réalisation représentée sur les figures 11 et 12, les dispositions sont sensiblement les mêmes que celles décrites en référence aux figures 9 et 10, mais, au lieu d'être rapportés sur la face interne des ailes latérales 12 de la goulotte de câblage 10, les accessoires 35 prévus suivant l'invention sont rapportés sur la face externe de celles-ci, tel que schématisé par une flèche F'2 sur la figure 11 pour l'un d'eux.

Corollairement, les moyens d'encliquetage complémentaires que présente un tel accessoire 35 au niveau du bord libre 14 des ailes latérales 12 de la goulotte de câblage 10 sont constitués par un simple bourrelet d'encliquetage 36'.

Suivant la forme de réalisation représentée sur la figure 13, les dispositions sont sensiblement les mêmes que celles décrites en référence aux figures 11 et 12, mais, au lieu d'être arrondie, la rainure 48 que l'accessoire 35 présente à son dos a, en section transversale, un profil polygonal, qui exclut que le montage du couvercle 44 puisse être pivotant.

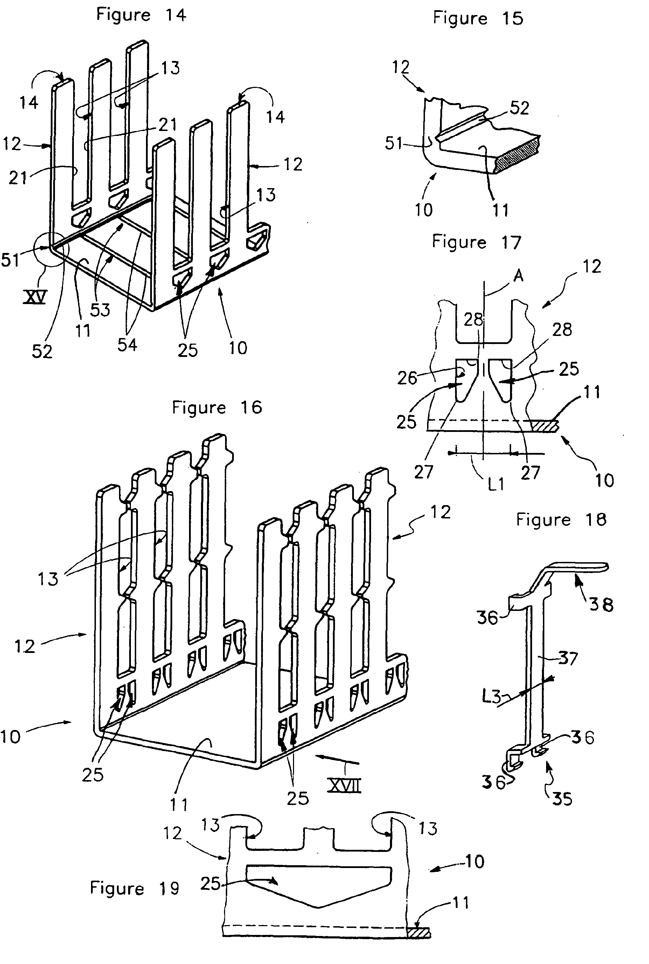

Suivant la variante de réalisation représentée sur les figures 14 et 15, les ouvertures 13 des ailes latérales 12 débouchent librement sur le bord libre 14 de ces ailes latérales 12, comme dans les formes de réalisation décrites en référence aux figures 1 à 8, mais, sur les bords latéraux 21 de ces ouvertures 13, il n'est prévu aucun ergot 22.

Pour le reste, les dispositions sont du même type que les précédentes.

Mais, dans cette forme de réalisation, la goulotte de câblage 10 comporte, longitudinalement, pour l'une au moins de ses ailes latérales 12, et, en pratique, pour chacune de celles-ci, une zone de moindre résistance 51 qui court sur toute sa longueur à proximité du ou des orifices 25 présents sur une telle aile latérale 12, voire, même, au ras de ceux-ci.

Par exemple, et tel que représenté, cette zone de moindre résistance 51 résulte de la présence d'une gorge 52 en creux sur la face interne des ailes latérales 12.

De même, dans la forme de réalisation représentée, la goulotte de câblage 10 comporte, transversalement, de place en place, sur son fond 11, en correspondance avec les ouvertures 13 de l'une au moins de ses ailes latérales 12, des zones de moindre résistance 53, qui, par exemple, et tel que représenté, sont du même type que la précédente, en résultant chacune de la présence d'une gorge 54 en creux sur la face interne du fond 11, et qui s'étendent chacune de l'une à l'autre des ailes latérales 12.

Ainsi qu'il est aisé de le comprendre, ces zones de moindre résistance 51, 53 sont de nature à faciliter une éventuelle coupe ou découpe de la goulotte de câblage 10, par exemple pour l'établissement d'une dérivation du type de celle représentée sur la figure 3.

Ainsi qu'il est également aisé de le comprendre, ces zones de moindre résistance 51, 53 sont indépendantes de la forme des ailes latérales 12, et, notamment, de la configuration des ouvertures 13 que comportent celles-ci.

Dans la forme de réalisation représentée sur les figures 16 et 17, il y a, pour une même ouverture 13 des ailes latérales 12 de la goulotte de câblage 10, à un même niveau par rapport au fond 11, au moins deux orifices 25.

Par exemple, et tel que représenté, seuls deux orifices 25 sont ainsi prévus côte à côte, et ces deux orifices 25 sont symétriques l'un de l'autre par rapport à un axe A sensiblement perpendiculaire au fond 11.

Comme précédemment, ils ont chacun un contour fermé.

Comme précédemment, également, pour faciliter le guidage d'un éventuel outil de coupe, ils comportent deux bords latéraux 26, qui, du côté du fond 11, convergent au moins localement l'un vers l'autre, suivant une forme générale de pointe 27 dirigée vers ce fond 11.

L'un de ces bords latéraux 26, et il s'agit en l'espèce de celui qui est le plus extérieur, s'étend sensiblement perpendiculairement au fond 11 sur la totalité de sa longueur.

L'autre, et il s'agit donc de celui qui est le plus intérieur, ne s'étend perpendiculairement au fond 11 que sur une partie de sa longueur, en étant au contraire oblique par rapport à ce fond 11, et donc par rapport à l'autre bord latéral 26, sur la partie restante de celle-ci.

Comme précédemment, enfin, pour faciliter l'intervention éventuelle d'une patte d'encliquetage 36 d'un quelconque accessoire 35, chacun de ces orifices 25 comporte, du côté de l'ouverture 13 à laquelle il est associé, un bord 28 qui est parallèle au fond 11.

Les orifices 25 ont ainsi chacun un contour en trapèze.

Dans la forme de réalisation représentée, leur emprise globale s'étend, en largeur, suivant sensiblement la largeur L1 de l'ouverture 13 à laquelle ils sont l'un et l'autre conjointement associés.

Pour le reste, les dispositions sont du même type que les précédentes.

Dans la variante de réalisation représentée sur la figure 18, et comme évoqué ci-dessus, l'accessoire 35 suivant l'invention est destiné à ne s'étendre en largeur que sur la languette 18 à laquelle il est appliqué.

La largeur L3 de son jambage 37 est alors sensiblement égale à celle L2 d'une telle languette 18.

Dans la forme de réalisation, ce jambage 37 est plein.

Les pattes d'encliquetage 36 inférieures sont en saillie sur les tranches de ce jambage 37, et il en est de même pour les pattes d'encliquetage 36 supérieures, qui, pour se crocheter sur une languette 18, s'étendent perpendiculairement aux précédentes au lieu d'être parallèles à celles-ci.

Dans la forme de réalisation représentée sur la figure 19, un même orifice 25 s'étend à l'aplomb d'au moins deux ouvertures 13.

Par exemple, et tel que représenté, cet orifice 25 ne concerne que deux ouvertures 13.

Mais, en variante, il peut concerner un nombre supérieur d'ouvertures 13.

Pour le reste, les dispositions sont les mêmes que les précédentes.

Bien entendu, la présente invention ne se limite pas aux formes de réalisation décrites et représentées, mais englobe toute variante d'exécution et/ou de combinaison de leurs divers éléments.

## Revendications

1. Goulotte de câblage du genre comportant, suivant une section transversale en forme générale de U, un fond (11) et deux ailes latérales (12), avec, de place en place, sur l'une au moins des ailes latérales (12), des ouvertures (13) propres à permettre, localement, l'entrée ou la sortie d'au moins un câble électrique, **caractérisée en ce qu'**elle présente, à l'aplomb de l'une au moins des ouvertures (13) de l'une au moins de ses ailes latérales (12), entre l'extrémité borgne de cette ouverture (13) et le fond (11), au moins un orifice (25) ayant un contour fermé.

2. Goulotte de câblage suivant la revendication 1, **caractérisée en que** l'orifice (25) comporte deux bords latéraux (26), qui, du côté du fond (11), convergent au moins localement l'un vers l'autre, suivant une forme générale de pointe (27) dirigée vers ce fond (11).

3. Goulotte de câblage suivant l'une quelconque des revendications 1 à 2, **caractérisée en ce que** l'un au moins des bords latéraux (26) de l'orifice (25) s'étend sensiblement perpendiculairement au fond (11) sur une partie au moins de sa longueur.

4. Goulotte de câblage suivant l'une quelconque des revendications 1 à 3, **caractérisée en ce que**, du côté de l'ouverture (13) à laquelle il est associé, l'orifice (25) comporte un bord (28) qui est parallèle au fond (11).

5. Goulotte de câblage suivant l'une quelconque des revendications 1 à 4, **caractérisée en ce que** l'orifice (25) est symétrique par rapport à un axe (A) sensiblement perpendiculaire au fond (11).

6. Goulotte de câblage suivant l'une quelconque des revendications 1 à 5, **caractérisée en ce que**, pour une même ouverture (13), il y a, à un même niveau par rapport au fond (11), au moins deux orifices (25).

7. Goulotte de câblage suivant la revendication 6, **caractérisée en ce que** les deux orifices (25) sont symétriques l'un de l'autre par rapport à un axe (A) sensiblement perpendiculaire au fond (11).

8. Goulotte de câblage suivant l'une quelconque des revendications 1 à 7, **caractérisée en ce que**, pour l'une au moins de ses ailes latérales (12), elle comporte, longitudinalement, une zone de moindre résistance (51) qui court sur toute sa longueur à proximité du ou des orifices (25) présents sur cette aile latérale (12), voire, même, au ras de ceux-ci.

9. Goulotte de câblage suivant l'une quelconque des revendications 1 à 8, **caractérisée en ce qu'**elle comporte, transversalement, de place en lace, sur son fond (11), des zones de moindre résistance (53), en correspondance avec les ouvertures (13) de l'une au moins de ses ailes latérales (12).

10. Goulotte de câblage suivant l'une quelconque des revendications 1 à 9, **caractérisée en ce que** chacune des ses ailes latérales (12) comporte, de place en place, des ouvertures (13), et il y a au moins un orifice (25) à l'aplomb de chacune de celles-ci.

11. Goulotte de câblage suivant l'une quelconque des revendications 1 à 10, **caractérisée en ce qu'**un même orifice (25) s'étend à l'aplomb d'au moins deux ouvertures (13).

12. Goulotte de câblage suivant l'une quelconque des revendications 1 à 11, **caractérisée en ce que** des ergots (22) font localement saillie sur chacun des bords latéraux (21) des ouvertures (13) pour restreindre localement la largeur des ouvertures (13).

13. Accessoire pour goulotte de câblage suivant l'une quelconque des revendications 1 à 12, **caractérisé en ce qu'**il comporte, localement, en saillie, au moins une patte d'encliquetage (36) par laquelle il est apte à se crocheter sur l'une des ailes latérales (12) d'une telle goulotte de câblage (10) à la faveur d'un quelconque des orifices (25) que cette aile latérale (12) présente à l'aplomb de ses ouvertures (13).

14. Accessoire suivant la revendication 13, **caractérisé en ce qu'**il comporte, à proximité l'une de l'autre, deux pattes d'encliquetage (36) par lesquelles il est apte à enserrer l'une des brides (30) que l'aile latérale (12) concernée de la goulotte de câblage (10) forme localement entre ses ouvertures (13) et ses orifices (25).

15. Accessoire suivant l'une quelconque des revendications 13 ou 14, **caractérisé en ce qu'**il comporte, d'une part, un jambage (37), par lequel il est destiné à être adossé à l'une des ailes latérales (12) de la goulotte de câblage (10), et qui porte en saillie sa ou ses pattes d'encliquetage (36), et, d'autre part, une traverse (38), qui s'étend en porte à faux à compter de ce jambage (37), et par laquelle il est destiné à surplomber au moins localement le fond (11) de la goulotte de câblage (10), à distance de ce fond (11), et sur une partie au moins de la largeur de celui-ci.

16. Accessoire suivant l'une quelconque des revendications 13 à 15, **caractérisé en ce qu'**il comporte, à distance de sa ou de ses pattes d'encliquetage (36), des moyens d'encliquetage complémentaires par lesquels il est également apte à se crocheter sur l'aile latérale (12) concernée de la goulotte de câblage (10).

17. Accessoire suivant la revendication 16, **caractérisé en ce que** les moyens d'encliquetage complémentaires sont constitués par au moins une autre patte d'encliquetage (36).

18. Accessoire suivant la revendication 16, **caractérisé en ce que** les moyens d'encliquetage complémentaires sont constitués par un bourrelet d'encliquetage (36').

19. Accessoire suivant l'une quelconque des revendications 15 à 18, **caractérisé en ce qu'**il comporte à son dos, c'est-à-dire du côté opposé à sa traverse (38), une rainure (48) propre à l'encliquetage d'un couvercle (44).

20. Accessoire suivant la revendication 19, **caractérisé en ce que** la rainure (48) qu'il comporte à son dos est arrondie, pour un montage pivotant du couvercle (44).

21. Accessoire suivant l'une quelconque des revendications 19 ou 20, **caractérisé en ce que** la rainure (48) qu'il comporte à son dos intervient sensiblement au niveau du raccordement de sa traverse (38) à son jambage (37).

22. Goulotte de câblage suivant l'une quelconque des revendications 1 à 12, **caractérisée en ce qu'**elle est équipée d'au moins un accessoire (35) conforme à l'une quelconque des revendications 13 à 21.

## Claims

1. Cable trunking having a generally U-shaped cross section delimited by a base (11) and two side flanges (12) and spaced openings (13) on at least one of the side flanges (12) for local entry or exit of at least one electrical cable, **characterised in that** it has at least one orifice (25) vertically in line with at least one of the openings (13) in at least one of its side flanges (12), between the close end of that opening (13) and the base (11).

2. Cable trunking according to claim 1, **characterised in that** the orifice (25) has two lateral edges (26) which on the same side as the base (11) converge at least locally to form a point (27) directed toward the base (11).

3. Cable trunking according to claim 1 or claim 2, **characterised in that** at least one of the lateral edges (26) of the orifice (25) is substantially perpendicular to the base (11) over at least part of its length.

4. Cable trunking according to any one of claims 1 to 3, **characterised in that** the orifice (25) has an edge (28) parallel to the base (11) on the same side as the associated opening (13).

5. Cable trunking according to any one of claims 1 to 4, **characterised in that** the orifice (25) is symmetrical about an axis (A) substantially perpendicular to the base (11)

6. Cable trunking according to any one of claims 1 to 5, **characterised in that** there are at least two orifices (25) for the same opening (13) and at the same level relative to the base (11).

7. Cable trunking according to claim 6, **characterised in that** the two orifices (25) are symmetrical about an axis (A) substantially perpendicular to the base (11).

8. Cable trunking according to any one of claims 1 to 7, **characterised in that** at least one of its side flanges (12) has a longitudinal weaker area (51) which runs its entire length in the vicinity of the orifice(s) (25) **in that** side flange (12), or even level therewith.

9. Cable trunking according to any one of claims 1 to 8, **characterised in that** it includes spaced transverse weaker areas (53) in its base (11) in corresponding relationship to the openings (13) in at least one of its side flanges (12).

10. Cable trunking according to any one of claims 1 to 9, **characterised in that** each of its side flanges (12) has spaced openings (13) and there is at least one orifice (25) vertically in line with each of them.

11. Cable trunking according to any one of claims 1 to 10, **characterised in that** there is one orifice (25) vertically in line with at least two openings (13).

12. Cable trunking according to any one of claims 1 to 11, **characterised in that** lugs (22) project locally on each of the lateral edges (21) of the openings (13) in order locally to limit the width of the openings (13).

13. Accessory for cable trunking according to any one of claims 1 to 12, **characterised in that** it includes at least one locally projecting clip (36) adapted to hook onto one of the side flanges (12) of the cable trunking (10) by means of any of the orifices (25) **in that** side flange (12) vertically in line with its openings (13).

14. Accessory according to claim 13, **characterised in that** it includes two closely spaced clips (36) adapted to grip a flange (30) that the side flange (12) concerned of the cable trunking (10) forms locally between its openings (13) and its orifices (25).

15. Accessory according to claim 13 or claim 14, **characterised in that** it includes a jamb (37) adapted to be placed against one of the side flanges (12) of the cable trunking (10) and from which its clip(s) (36) extend(s) and a crosspiece (38) extending cantilever fashion from the jamb (37) and adapted to overlie at least locally the base (11) of the cable trunking (10) at a distance from the base (11) and over at least part of its width.

16. Accessory according to any one of claims 13 to 15, **characterised in that** it includes, at a distance from its clip(s) (36), complementary clipping means adapted to hook onto the side flange (12) concerned of the cable trunking (10).

17. Accessory according to claim 16, **characterised in that** the complementary clipping means comprise at least one other clip (36).

18. Accessory according to claim 16, **characterised in that** the complementary clipping means comprise a clip bead (36').

19. Accessory according to any one of claims 15 to 18, **characterised in that** it has on the back, i.e. on the side opposite its crosspiece (38), a groove (48) into which a cover (44) can be clipped.

20. Accessory according to claim 19, **characterised in that** the groove (48) on its back is rounded for pivotal mounting of the cover (44).

21. Accessory according to claim 19 or claim 20, **characterised in that** the groove (48) in its back is substantially level with the point where its crosspiece (38) joins onto its jamb (37).

22. Cable trunking according to any one of claims 1 to 12, **characterised in that** it is equipped with at least one accessory (35) according to any one of claims 13 to 21.

## Patentansprüche

1. Kabelkanal, der in einem allgemein U-förmigen Querschnitt einen Boden (11) und zwei Seitenwangen (12) aufweist, wobei an mindestens einer Seitenwange (12) stellenweise Öffnungen (13) vorgesehen sind, die örtlich den Eintritt oder den Austritt mindestens eines elektrischen Kabels gestatten, **dadurch gekennzeichnet**, das er senkrecht unter mindestens einer der Öffnungen (13) mindestens einer seiner Seitenwangen (12) zwischen dem geschlossenen Ende dieser Öffnung (13) und dem Boden (11) mindestens ein Loch (25) mit einem geschlossenen Umriss aufweist.

2. Kabelkanal nach Anspruch 1, **dadurch gekennzeichnet, dass** die Öffnung (25) zwei seitliche Ränder (26) umfasst, die auf der Seite des Bodens (11) mindestens örtlich gemäß einer allgemeinen Form einer auf diesen Boden (11) zu gerichteten Spitze (27) auf einander zu konvergieren.

3. Kabelkanal nach einem der Ansprüche 1 bis 2, **dadurch gekennzeichnet, dass** mindestens einer der seitlichen Ränder (26) des Lochs (25) sich mindestens auf einem Teil seiner Länge im Wesentlichen senkrecht zum Boden (11) erstreckt.

4. Kabelkanal nach einem der Ansprüche 1 bis 3, **dadurch gekennzeichnet, dass** das Loch (25) auf der Seite der Öffnung (13), der es zugeordnet ist, einen Rand (28) besitzt, der zum Boden (11) parallel ist.

5. Kabelkanal nach einem der Ansprüche 1 bis 4, **dadurch gekennzeichnet, dass** das Loch (25) bezüglich einer zum Boden (11) im Wesentlichen senkrechten Achse (A) symmetrisch ist.

6. Kabelkanal nach einem der Ansprüche 1 bis 5, **dadurch gekennzeichnet, dass** bei ein und derselben Öffnung (13) auf gleicher Höhe in Bezug auf den Boden (11) mindestens zwei Löcher (25) vorgesehen sind.

7. Kabelkanal nach Anspruch 6, **dadurch gekennzeichnet, dass** die beiden Löcher (25) bezüglich einer zum Boden (11) im Wesentlichen senkrechten Achse (A) zueinander symmetrisch sind.

8. Kabelkanal nach einem der Ansprüche 1 bis 7, **dadurch gekennzeichnet, dass** er an mindestens einer seiner Seitenwangen (12) in Längsrichtung einen Bereich (51) geringerer Festigkeit aufweist, der in Nähe des oder der auf dieser Seitenwange (12) vorgesehenen Löcher (25) oder auch mit diesen bündig über seine ganze Länge läuft.

9. Kabelkanal nach einem der Ansprüche 1 bis 8, **dadurch gekennzeichnet, dass** er in Querrichtung auf seinem Boden (11) stellenweise Bereiche (53) geringerer Festigkeit in Entsprechung mit den Öffnungen (13) mindestens einer seiner Seitenwangen (12) aufweist.

10. Kabelkanal nach einem der Ansprüche 1 bis 9, **dadurch gekennzeichnet, dass** jede seiner Seitenwangen (12) stellenweise Öffnungen (13) aufweist und mindestens ein Loch (25) unter jeder von diesen vorgesehen ist.

11. Kabelkanal nach einem der Ansprüche 1 bis 10, **dadurch gekennzeichnet, dass** ein und dasselbe Loch (25) sich unter mindestens zwei Öffnungen (13) erstreckt.

12. Kabelkanal nach einem der Ansprüche 1 bis 11, **dadurch gekennzeichnet, dass** Vorsprünge (22) örtlich an jedem der seitlichen Ränder (21) der Öffnungen (13) vorstehen, um die Breite der Öffnungen (13) örtlich zu verringern.

13. Zubehör für Kabelkanal nach einem der Ansprüche 1 bis 12, **dadurch gekennzeichnet, dass** es örtlich vorstehend mindestens eine Einrastzunge (36) aufweist, mit der es an einer der Seitenwangen (12) eines solchen Kabelkanals (10) in einem beliebigen der Löcher (25), die diese Seitenwange (12) unter ihren Öffnungen (13) aufweist, eingehakt werden kann.

14. Zubehör nach Anspruch 13, **dadurch gekennzeichnet, dass** es in Nähe voneinander zwei Einrastzungen (36) aufweist, mit denen es einen der Stege (30) einklemmen kann, die die betreffende Seitenwange (12) des Kabelkanals (10) örtlich zwischen ihren Öffnungen (13) und ihren Löchern (25) bildet.

15. Zubehör nach einem der Ansprüche 13 oder 14, **dadurch gekennzeichnet, dass** es einerseits einen Fuß (37), mit dem es dazu bestimmt ist, an eine der Seitenwangen (12) des Kabelkanals (10) angelegt zu werden, und der vorstehend seine Einrastzunge oder -zungen (36) trägt, und andererseits ein Querteil (38) aufweist, das sich auskragend von diesem Fuß (37) aus erstreckt und mit dem es dazu bestimmt ist, mindestens örtlich den Boden (11) des Kabelkanals (10) in einem Abstand von diesem Boden (11) und über mindestens einen Teil seiner Breite zu überkragen.

16. Zubehör nach einem der Ansprüche 13 bis 15, **dadurch gekennzeichnet, dass** es in einem Abstand von seiner bzw. seinen Einrastzungen (36) ergänzende Einrastmittel aufweist, mit denen es ebenfalls an der betreffenden Seitenwange (12) des Kabelkanals (10) eingehakt werden kann.

17. Zubehör nach Anspruch 16, **dadurch gekennzeichnet, dass** die ergänzenden Einrastmittel aus mindestens einer anderen Einrastzunge (36) bestehen.

18. Zubehör nach Anspruch 16, **dadurch gekennzeichnet, dass** die ergänzenden Einrastmittel aus einem Einrastwulst (36') bestehen.

19. Zubehör nach einem der Ansprüche 15 bis 18, **dadurch gekennzeichnet, dass** es auf seinem Rücken, d.h. auf der seinem Querteil (38) entgegengesetzten Seite, eine Nut (48) aufweist, die für das Einrasten eines Deckels (44) ausgelegt ist.

20. Zubehör nach Anspruch 19, **dadurch gekennzeichnet, dass** die Nut (48), die es auf seinem Rücken aufweist, für eine verschwenkbare Montage eines Deckels (44) abgerundet ist.

21. Zubehör nach einem der Ansprüche 19, 20, **dadurch gekennzeichnet, dass** die Nut (48), die es auf seinem Rücken aufweist, im wesentlichen auf Höhe der Verbindung seines Querteils (38) mit seinem Fuß (37) vorgesehen ist.

22. Kabelkanal nach einem der Ansprüche 1 bis 12, **dadurch gekennzeichnet, dass** er mit mindestens einem Zubehör (35) nach einem der Ansprüche 13 bis 18 ausgerüstet ist.
